Europäisches Patentamt

European Patent Office

Office européen des brevets

(19)

(11) Veröffentlichungsnummer : **0 085 144**
**B1**

(12) **EUROPÄISCHE PATENTSCHRIFT**

(45) Veröffentlichungstag der Patentschrift :
12.02.86

(21) Anmeldenummer : 82110086.4

(22) Anmeldetag : 02.11.82

(51) Int. Cl.⁴ : **H 04 Q 11/04,** H 04 J   3/06

(54) Anordnung für die Taktversorgung in einer digitalen Nachrichtenvermittlungsanlage.

(30) Priorität : 15.12.81 CH 7991/81

(43) Veröffentlichungstag der Anmeldung :
10.08.83 Patentblatt 83/32

(45) Bekanntmachung des Hinweises auf die Patenterteilung : 12.02.86 Patentblatt 86/07

(84) Benannte Vertragsstaaten :
CH DE LI NL

(56) Entgegenhaltungen :
US-A- 3 829 843
TELCOM REPORT, 4. Jahrgang, Beiheft "Digitalvermittlungssystem EWSD", April 1981, Seiten 43-48,
München, DE. H. GRÜNER et al.: " Synchronisation
der Vermittlungseinrichtungen in Digitalnetzen "
TELCOM REPORT, 4. Jahrgang, Beiheft "Digitalvermittlungssystem EWSD", April 1981, Seiten 28-32,
München, DE. K. NEUFANG: "Das Digitalkoppelnetz
im System EWSD"

(73) Patentinhaber : **SIEMENS-ALBIS AKTIENGESELL-
SCHAFT**
**EGA1/Verträge und Patente Postfach**
**CH-8047 Zürich (CH)**
**CH LI**
**Siemens Aktiengesellschaft**
**Berlin und München Wittelsbacherplatz 2**
**D-8000 München 2 (DE)**
**DE NL**

(72) Erfinder : **Kremer, Teodor**
**Kolbenacker 4**
**CH-8052 Zürich (CH)**
Erfinder : **Joye, Claude**
**Gyrhaldenstrasse 7**
**CH-8953 Dietikon (CH)**

EP 0 085 144 B1

**Beschreibung**

Die vorliegende Erfindung betrifft eine Anordnung zur Taktversorgung in einer digitalen Nachrichtenvermittlungsanlage gemäss dem Oberbegriff des Patentanspruches 1.

Eine solche Anordnung ist beispielsweise aus « Telcom Report », Beiheft « Digitalvermittlungssystem EWSD », April 1981, S. 43-48 bekannt. Derartige digitale Nachrichtenvermittlungsanlagen mit dezentraler Steuerungsstruktur werden vorteilhafterweise modular aufgebaut, damit jederzeit eine Anpassung der Ausbaugrösse an die jeweiligen Erfordernisse mit geringstmöglichem Aufwand erfolgen kann. Dies geschieht durch Hinzufügen entsprechender identischer Funktionseinheiten mit der zugehörigen Erweiterung der Programme. Mit zunehmender Grösse der Anlage erhöht sich auch die Anzahl der Verbindungsleitungen zwischen den Funktionseinheiten und es kann dann das Problem auftreten, dass die Anzahl der auf den elektronischen Baugruppen zur Verfügung stehenden Anschlüsse, aus welchen Baugruppen die Funktionseinheiten aufgebaut sind, nicht mehr ausreicht.

Der vorliegenden Erfindung liegt die Aufgabe zugrunde, in einer digitalen Nachrichtenvermittlungsanlage der eingangs genannten Art die Taktversorgung so auszulegen, dass die Anzahl der Verbindungsleitungen zwischen den einzelnen Funktionseinheiten minimiert und dadurch die Anzahl der erforderlichen Anschlüsse im Schaltungsaufbau herabgesetzt wird, wobei die Leitungslänge zwischen den zentralen und den peripheren Funktionseinheiten innerhalb eines bestimmten Bereiches beliebig sein kann. Dies gelingt mit einem Aufbau der Nachrichtenvermittlungsanlage gemäss dem Kennzeichen des Patentanspruches 1. Weiterbildungen der Erfindung sind in weiteren Ansprüchen angegeben.

Nachfolgend wird die Erfindung anhand von Zeichnungen beispielsweise näher erläutert. Dabei zeigt :

Figur 1 ein grobes Blockschaltbild einer periphere und zentrale Funktionseinheiten aufweisenden digitalen Nachrichtenvermittlungsanlage

Figur 2 Einzelheiten der Verbindungen zwischen den Funktionseinheiten dieser Vermittlungsanlage

Figur 3 bis 5 Impulsdiagramme zur Erläuterung der Funktionsweise der Vermittlungsanlage

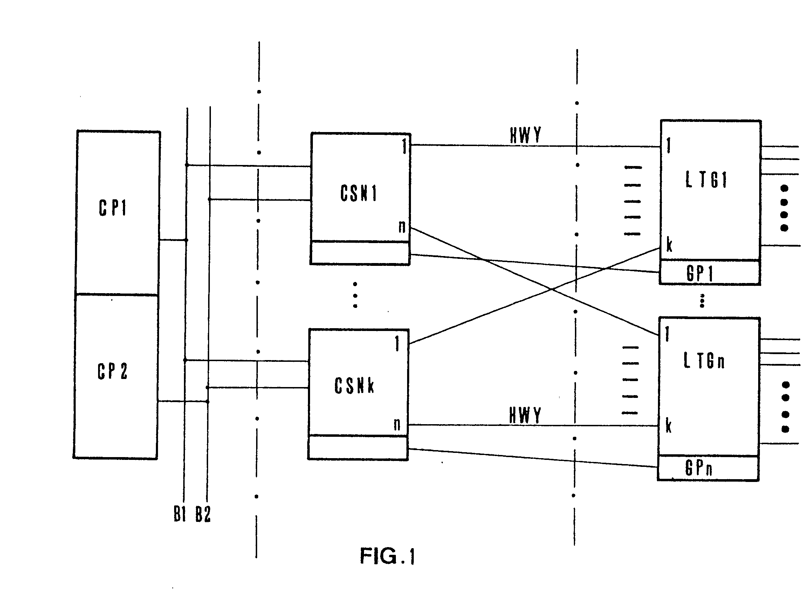

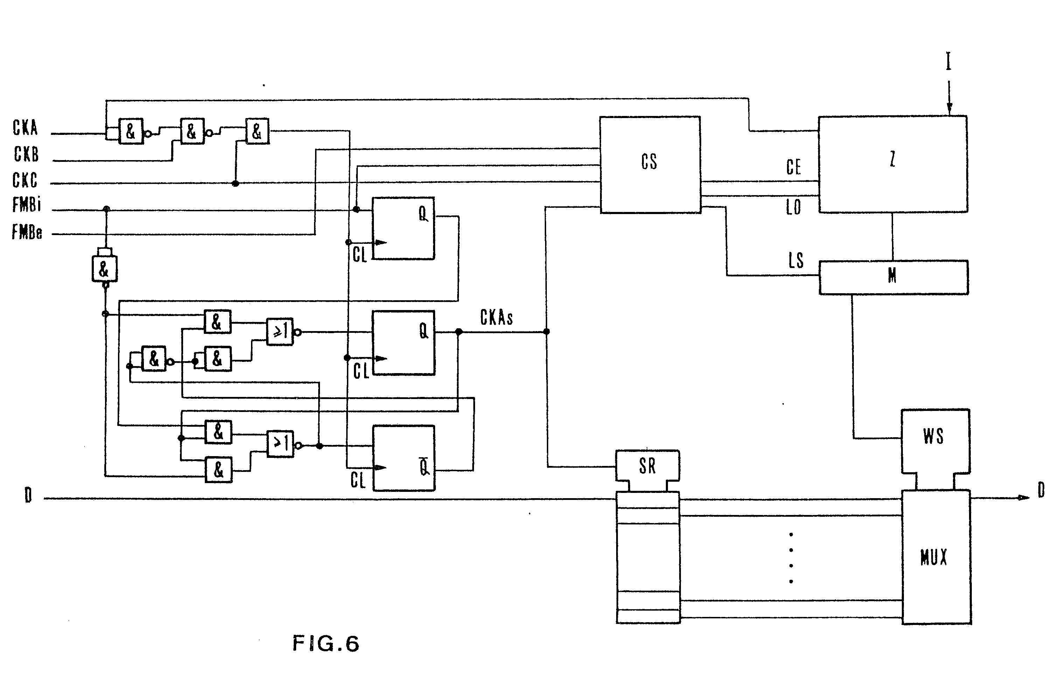

Figur 6 Einzelheiten der Steuerschaltung in den zentralen Funktionseinheiten Fig. 1 zeigt die Struktur einer aus räumlich getrennten peripheren und zentralen Funktionseinheiten aufgebauten digitalen Vermittlungsanlage. Diese besteht (von rechts nach links) im wesentlichen aus einem Anschlussbereich, einem Koppelnetz und einer zentralen Steuerung. Der Anschlussbereich ist in eine Anzahl von Anschlussgruppen LTG 1... LTG n aufgeteilt, die die Schnittstellen zwischen der Vermittlungsanlage und einer bestimmten Anzahl von anzuschliessenden digitalen oder analogen Teilnehmerleitungen oder anderen Endgeräten bilden. Im Falle von Analogleitungen wird in den Anschlussgruppen LTG die notwendige Analog-Digital-Umsetzung vorgenommen. Die Anschlussgruppen LTG enthalten auch die zur Signalisierung notwendigen Einrichtungen, wie Ruf- und Tongeneratoren. Ferner beinhalten die Anschlussgruppen LTG je eine Zeitkoppelstufe, über die die Verbindungen zum eigentlichen zentralen Durchschaltenetzwerk CSN der Vermittlungsanlage hergestellt werden. Das Durchschaltenetzwerd CSN besteht aus den Zeitstufen CSN 1... CSNk (n ist ein ganzzahliges Vielfach von k). Die Verbindung zwischen dem zentralen Durchschaltenetzwerk CSN und den Anschlussgruppen LTG erfolgt über standardisierte 2048 kbit/s-Vielfachleitungen HWY, über die die Sprachinformationen im PCM-Zeitmultiplexbetrieb übertragen werden. Jede Anschlussgruppe LTG ist über je eine Vielfachleitung HWY mit jeder Zeitstufe des Durchschaltenetzwerkes CSN verbunden. Die Anschlussgruppen LTG sind zudem mit einer eigenen Gruppensteuerung GP ausgerüstet und bilden somit eine autonome, in sich abgeschlossene Grundeinheit, die für die Aufnahme von beispielsweise 32 Anschlüssen vorgesehen ist und die die Möglichkeit zu beliebigen modularen Erweiterungen der Anlage bietet. Die Gruppensteuerungen GP 1... GPn stehen über nicht gezeigte spezielle Verbindungsleitungen mit dem zentralen Steuerwerk CP, das gedoppelt ist, in Verbindung. Ueber weitere spezielle Verbindungsleitungen B ist das zentrale Steuerwerk CP auch mit den Zeitstufen des zentralen Durchschaltenetzwerkes CSN verbunden. Ueber die genannten Verbindungsleitungen werden Steuer- und Kontrollinformationen ausgetauscht. Das zentrale Durchschaltenetzwerk CSN erlaubt die Herstellung von Verbindungen zwischen beliebigen Anschlussgruppen LTG.

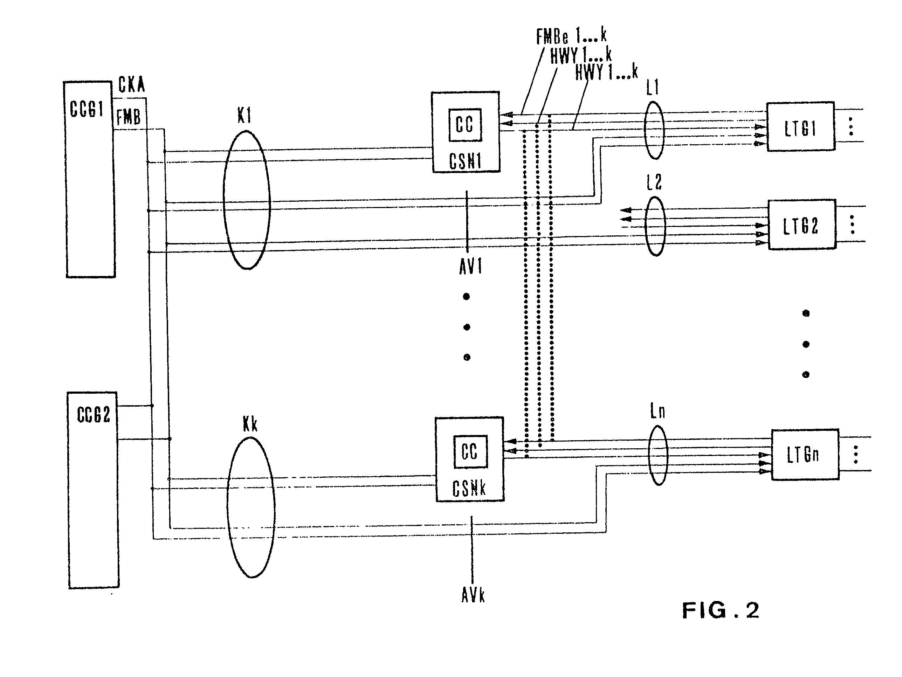

Fig. 2 zeigt Einzelheiten der Verbindungen zwischen den Zeitstufen des zentralen Durchschaltenetzwerkes CSN und den Anschlussgruppen LTG sowie die Taktverteilung in einer derart aufgebauten Vermittlungsanlage. Zwischen den Funktionseinheiten CSN und LTG findet ein Informationsfluss in beiden Richtungen statt. Als Informationsfluss in Vorwärtsrichtung wird im folgenden der Daten- und Sprachinformationsaustausch vom zentralen Durchschaltenetzwerk CSN zu den Anschlussgruppen LTG, als Informationsfluss in Rückwärtsrichtung der Austausch in umgekehrter Richtung bezeichnet. Der Austausch der Daten- und Sprachinformationen erfolgt im Vierdrahtbetrieb über Vielfachleitungen HWY. Jede Anschlussgruppe LTG ist über Vielfachleitungen HWY1... k mit jeder Zeitstufe des Durchschaltenetzwerkes CSN verbindbar. In einem aus Betriebssicherheitsgründen doppelt vorhandenen zentralen Taktgenerator CCG wird ein Systemtakt CKA und ein Synchronisierungssignal FMB erzeugt. Diese beiden Signale werden über gesonderte Zweidrahtleitungen einerseits jeder Zeitstufe CSN 1... CSNk und andererseits jeder Anschlussgruppe LTG 1... LTGn zugeführt. Die Zeitstufen sind über gleichlange Kabel K1... Kk mit dem zentralen Taktgenerator CCG verbunden. Die Kabel K1... Kk im Abschnitt CCG-CSN enthalten je eine Leitung zur Uebertragung der Signale CKA und FMB zu den Zeitstufen CSN 1... CSNk. Ferner enthält jedes Kabel K1... Kk n/k Leitungspaare, über die die Signale CKA und FMB zu einem Anschlussverteiler AV geführt werden, von dem aus jeweils n/k Anschlussgruppen LTG mit den Signalen CKA und FMB versorgt werden. Dabei erfolgt die Uebertragung der Signale CKA und FMB im Abschnitt CSN-LTG über Leitungen, die dem Kabel L1... Ln angehören, das auch die zur Uebertragung der Sprachinformationen dienenden Vielfachleitungen HWY enthält. Mit dieser Anordnung treffen die Sprachinformationen in den Anschlussgruppen LTG taktsynchron ein. Der in den Anschlussgruppen LTG eintreffende Takt CKA und das Synchronisierungssignal FMB sind an sich frequenzstarr, die Phasenlage des Taktsignales CKA in den einzelnen Anschlussgruppen LTG in bezug auf die Phasenlage in den Zeitstufen des Durchschaltenetzwerkes CSN ist jedoch abhängig von den Laufzeiten in den Kabeln L1... Ln, d. h. von den durch die räumlich getrennte Anordnung der Anschlussgruppen LTG bedingten unterschiedlichen Kabellängen. In Rückwärtsrichtung ist zwischen einer Anschlussgruppe LTG und dem Durchschaltenetzwerk CSN pro Zeitstufe nur noch die Vielfachleitung HWY und eine der Uebertragung des Synchronisierungssignals FMBe dienende Leitung vorhanden, welche beide wiederum dem gleichen Kabel L1... Ln angehören. Die infolge der auch in Rückwärtsrichtung auftretenden Laufzeiten an sich notwendige Uebertragung des Taktsignales CKA entfällt. Damit ergibt sich in einer komplexen Vermittlungsanlage gemäss Fig. 1 eine erhebliche Einsparung an Leitungen, was auch eine entsprechend geringere Anzahl von Anschlüssen sowohl in den Anschlussgruppen LTG als auch im Durchschaltenetzwerk CSN erforderlich macht. Auf das gesonderte Leitungspaar zur direkten Versorgung der Zeitstufen CSN mit den Signalen CKA und FMB kann auch verzichtet werden, ebenso genügt prinzipiell insgesamt ein Leitungspaar in einem Abschnitt CCG-CSN bzw. AV zur Uebertragung der Signale CKA und FMB. Die Verteilung auf die Zeitstufe CSN und die Anschlussgruppen LTG kann dann am Ende dieses Abschnittes erfolgen. Damit lässt sich wohl ein verminderter Kabelaufwand erzielen, im Gegensatz zu der in Fig. 2 gezeigten Anordnung werden jedoch im Falle einer Störung mehrere Funktionseinheiten gleichzeitig betroffen.

Die Aussendung der Informationen in Rückwärtsrichtung erfolgt mit dem in der Anschlussgruppe LTG vom zentralen Taktgenerator CCG eintreffenden Takt CKA. Die zurückgesendeten Informationen treffen infolgedessen im Durchschaltenetzwerk CSN mit diesem Takt ein. Infolge der Laufzeiten in Vorwärts- und in Rückwärtsrichtung besteht jedoch eine Phasenverschiebung zwischen dem Sendetakt und dem Empfangtakt, wobei diese Verschiebung umso grösser ist, je länger die Leitung zwischen dem Durchschaltenetzwerk CSN und den Anschlussgruppen LTG ist. Auch das Synchronisierungssignal FMB erleidet auf dem Hin- und auf dem Rückweg eine durch die Leitungslänge bedingte Verzögerung. Die Informationen selbst unterliegen im Gegensatz zum Synchronisierungssignal FMB nebst der Laufzeitverzögerung noch einer durch die Verarbeitung in der Anschlussgruppe LTG bedingten zusätzlichen Verzögerung.

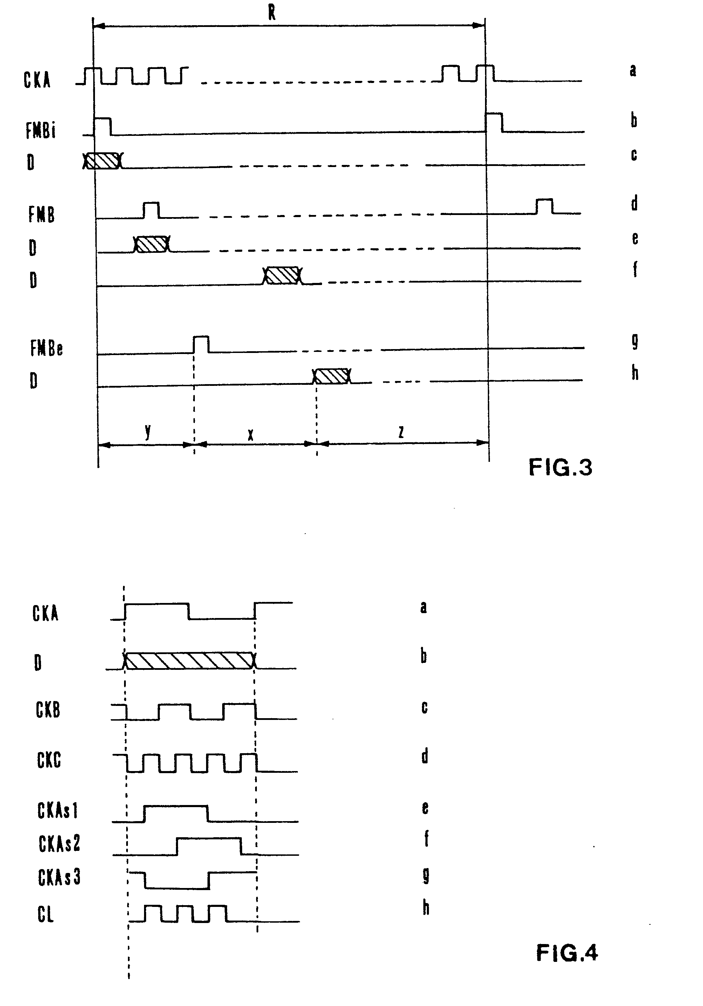

Diese Verhältnisse sind in Fig. 3 anhand einer Darstellung über der Zeitachse veranschaulicht. In Fig. 3a und b ist das vom zentralen Taktgenerator CCG im Durchschaltenetzwerk CSN eintreffende Taktsignal CKA bzw. Synchronisierungssignal aufgetragen. Letzteres stellt ein Rahmenkennungssignal FMBi dar, das im vorliegenden Fall vereinfachend zeitgleich mit dem Beginn eines jeden Pulsrahmens R auftritt, wobei jeder Pulsrahmen in bekannter Weise 32 Zeitkanäle zu je 8 Bit umfasst. Das Rahmenkennungssignal FMBi muss selbstverständlich nicht notwendigerweise bei jedem Rahmen R auftreten, es kann auch nur in Abständen von mehreren aufeinanderfolgenden Rahmen R vorgesehen werden. Die vom Durchschaltenetzwerk CSN zur Anschlussgruppe LTG gesendeten Informationen D (Fig. 3c) treffen in der Anschlussgruppe LTG takt- und rahmensynchron (Fig. 3d, e) ein. Das Rahmenkennungssignal FMB wird unverzüglich in Rückwärtsrichtung weitergesendet, wogegen die Informationen D innerhalb der Anschlussgruppe LTG verarbeitet und daher erst nach einer konstanten Verarbeitungsverzögerung zum Durchschaltenetzwerk CSN zurückgeschickt werden (Fig. 3f). Demzufolge treffen sie dort — bezogen auf den ursprünglichen Sendetakt CKA — nicht mehr unbedingt takt- und rahmensynchron (Fig. 3g, h) ein. Es müssen daher besondere Massnahmen getroffen werden, um einerseits einen taktgerechten Empfang der Informationen D und andererseits den Rahmengleichlauf im Durchschaltenetzwerk CSN zu gewährleisten. Dabei ist zu berücksichtigen, dass die Verzögerung der Informationen D unterschiedlich sein kann, je nach Länge der Verbindungsleitung zwischen der Anschlussgruppe LTG und dem Durchschaltenetzwerk CSN.

Ausgehend von der Gleichung $x + y + z = 256$ lässt sich allgemein die Bedingung für den Ausgleich der Phasenunterschiede innerhalb eines Rahmens mit 256 Bitstellen durch $z = 256 - x - y$ angeben, wo $x$ die konstante Verarbeitungsverzögerung und $y$ die von der Leitungslänge abhängige Laufzeitverzögerung ist und $x$, $y$ und $z$ in Periodenlängen des Taktes CKA angegeben sind.

Zunächst muss einmal dafür gesorgt werden, dass die im Durchschaltenetzwerk CSN asynchron zum Sendetakt CKA eintreffenden Informationen D taktgerecht eingelesen werden können.

Dazu enthält jede Zeitstufe des Durchschaltenetzwerkes CSN pro angeschlossene Vielfachleitung HWY eine Steuerschaltung CC (Fig. 6), die zunächst aus dem vom zentralen Taktgenerator CCG abgegebenen Takt CKA einen simulierten Takt CKAs erzeugt, mit dem die auf einer Vielfachleitung eintreffenden Informationen in jedem Fall sicher empfangen werden können.

In Fig. 4 sind Impulsdiagramme dargestellt, aus denen die Erzeugung des simulierten Taktes CKAs ersichtlich ist. Im Durchschaltenetzwerk CSN steht wie erwähnt der Systemtakt CKA zur Verfügung, mit dem die Informationen D zur Anschlussgruppe LTG ausgesendet werden. Aus dem Systemtakt CKA von 2 048 MHz werden die beiden Takte CKB und CKC mit doppelter bzw. vierfacher Frequenz erzeugt (Fig. 4c, d). In Fig. 4e, f, g sind relativ zum Systemtakt CKA verschobene simulierte Takte CKAs1, CKAs2 und CKAs3 gezeigt, mit deren steigender Flanke die Informationen D bei jeder möglichen Verschiebung relativ zu einer Periode des Systemtaktes CKA einwandfrei übernommen werden können. Gemäss der logischen Beziehung

$$\overline{\mathrm{CKA} \cdot \mathrm{CKB} \cdot \mathrm{CKC}}$$

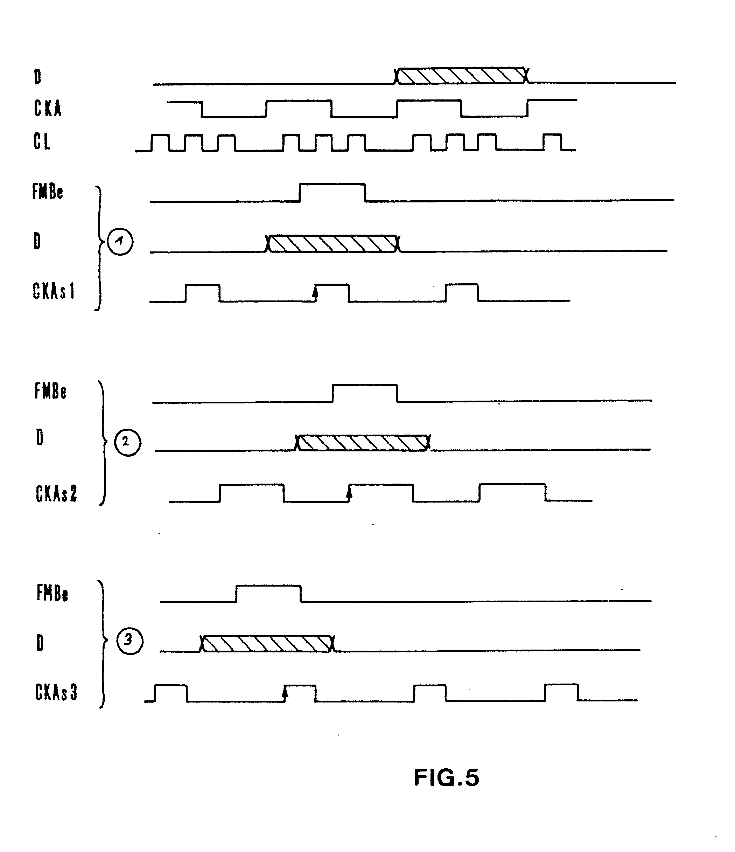

wird mittels einer nicht weiter darzustellenden logischen Schaltung ein Hilfstakt CL (Fig. 4h) mit einer periodischen Folge von Impulsen erzeugt, deren steigende Flanken zeitlich mit den steigenden Flanken der simulierten Takte CKAs1, CKAs2 und CKAs3 übereinstimmen. Mit welcher steigenden Flanke die Informationen D jeweils eingelesen werden, hängt von der zeitlichen Verschiebung zwischen dem von der Anschlussgruppe LTG im Durchschaltenetzwerk CSN eintreffenden Rahmenkennungssignal FMBe (Fig. 3g) und dem Systemtakt CKA im Durchschaltenetzwerk CSN ab. Einzelheiten hierzu sind in Fig. 5 in einem Impulsdiagramm gezeigt.

Auf den oberen drei Zeitachsen sind die vom Durchschaltenetzwerk CSN in Vorwärtsrichtung abgehenden Informationen D, der zugehörige Sendetakt CKA und der Hilfstakt CL dargestellt, wie sie bereits aus Fig. 4 bekannt sind. Darunter sind drei mögliche Fälle für die zeitliche Verschiebung zwischen den im Durchschaltenetzwerk CSN eintreffenden Informationen D und dem Sendetakt CKA sowie der je nach Lage des von der Anschlussgruppe LTG zum Durchschaltenetzwerk CSN rückübertragenen Rahmenkennungssignals FMBe zugehörige simulierte Uebernahmetakt CKAs gezeigt.

Es ist ersichtlich, dass für sämtliche möglichen Phasenverschiebungen zwischen einer Information D und dem Sendetakt CKA im Durchschaltenetzwerk CSN jeweils ein simulierter Takt CKAs als Uebernahmetakt für die Informationen zur Verfügung steht, der immer dann auftritt, wenn die Information D eindeutig ist. Die die Informationen D übernehmende Flanke des simulierten Taktes CKAs ist in Fig. 5 zur Verdeutlichung mit einem Pfeil gekennzeichnet. Welcher der drei simulierten Takte CKAs jeweils zum Zuge kommt, wird immer beim Auftreten eines Rahmenkennungssignals FMBe neu ermittelt, wobei dessen relative Stellung zum Sendetakt CKA jeweils den zum zeitgerechten Einlesen der Informationen D notwendigen simulierten Takt CKAs bestimmt.

Fig. 6 zeigt die bereits erwähnte Steuerschaltung CC, der die anhand der Fig. 3 bis 5 geschilderten Verhältnisse zugrundeliegen und die zunächst ein taktgerechtes Einlesen der von einer Anschlussgruppe LTG zum Durchschaltenetzwerk CSN gelangenden Informationen D ermöglicht. Der Schaltungsteil links erzeugt aus den Takten CKA, CKB und CKC (Fig. 4) aufgrund der zeitlichen Lage des in der jeweiligen Anschlussgruppe eintreffenden Rahmenkennungssignals FMB den simulierten Takt CKAs1 bzw. CKAs2 bzw. CKAs3 gemäss Fig. 5. Dabei wird im wesentlichen das Rahmenkennungssignal FMB drei D-Kippstufen zugeführt, deren Takteingang mit dem Hilfstakt CL (Fig. 4h) beaufschlagt ist. Am Ausgang der einen D-Kippstufe erscheint der simulierte Takt CKAs. Der gezeigte Schaltungsteil links stellt eine von vielen Möglichkeiten zur Erzeugung des simulierten Taktes CKAs dar ; die darin verwendeten Schaltungselemente sind nicht zwingend. Die durch diese Schaltung erzeugte logische Funktion lässt sich durchaus auch mit anderen logischen Bauelementen realisieren.

An sich können nun die im Durchschaltenetzwerk CSN eintreffenden Informationen D mit dem simulierten Takt CKAs eingelesen und mit dem dort vorhandenen Systemtakt CKA weiterverarbeitet werden. Es ist nun aber noch notwendig, den infolge der bereits anhand von Fig. 3 erläuterten Verzögerungen gestörten Rahmengleichlauf wieder herzustellen. Dies geschieht ebenfalls mit der Steuerschaltung CC, und zwar mit dem Schaltungsteil rechts in Fig. 6. Der Rahmengleichlauf z richtet sich nach der bereits erwähnten Gesetzmässigkeit $z = 256 - x - y$. Die Summe $256 - x$ ist im Falle einer konstanten Verarbeitungszeit jeweils bekannt und unveränderlich. Damit ist der vorzunehmende Rahmenausgleich z allein abhängig von der Leitungsverzögerung y. Je länger die Verbindungsleitung zwischen einer Anschlussgruppe LTG und einer Zeitstufe des Durchschaltenetzwerkes CSN ist, desto kleiner ist der in Anzahl Perioden des Systemtaktes CKA gemessene Rahmenausgleich z. Der Wert für die Leitungsverzögerung y ergibt sich unmittelbar aus der zeitlichen Verschiebung zwischen dem einer Zeitstufe des Durchschaltenetzwerkes CSN vom zentralen Taktgenerator CCG zugeführten Rahmenkennungssignal FMBi und dem von der Anschlussgruppe LTG zurückübertragenen Rahmenkennungssignal FMBe.

Die Bestimmung der entsprechenden zeitlichen Verschiebung erfolgt mittels einer Zählschaltung, die aus einer Zählersteuerung CS und dem eigentlichen Zähler Z besteht. Da der vorzunehmende Rahmengleichlauf z umgekehrt proportional zur Laufzeitverzögerung y ist, erweist es sich als vorteilhaft, den Zähler Z als Rückwärtszähler zu betreiben, der jeweils auf den Wert 256 − x initialisiert wird. Die Zählersteuerung CS erzeugt ein Signal CE, das den an seinem Zähleingang mit dem Systemtakt CKA beaufschlagten Zähler Z während einer der zeitlichen Verschiebung der beiden Rahmenkennungssignale FMBe und FMBi entsprechenden Zeitspanne in den Zählzustand versetzt. Der Zählwert des Zählers Z entspricht somit der in der Anzahl von Systemtaktperioden ausgedrückten zeitlichen Verschiebung z, die auszugleichen ist. Dieser in binärer Form vorliegende Wert wird mittels eines ebenfalls in der Zählersteuerung CS erzeugten Lesesignals LS in einen Speicher M eingetragen und der Zähler Z hierauf initialisiert. Die Initialisierung auf einen am Eingang I vorzugebenden Wert erfolgt durch ein von der Zählersteuerung CS abgegebenes Signal LO. Der Speicher M ist mit einer Wählschaltung WS verbunden, die aufgrund des ihr jeweils vom Speicher M angebotenen Zählwertes einen Multiplexer MUX derart steuert, dass die von diesem abgehende, die Informationen D übernehmende Leitung jeweils mit einer diesem Wert zugeordneten Zelle eines Schieberegisters SR verbunden wird. Diesem Schieberegister SR werden die von einer Anschlussgruppe LTG über eine Vielfachleitung HWY eintreffenden Informationen D zugeführt. Als Schiebetakt für das Schieberegister SR dient der simulierte Takt CKAs. Das Schieberegister SR weist mindestens 256 − x Speicherzellen auf, die je mit einem zugeordneten Eingang des Multiplexers MUX verbunden sind. Dabei ist die erste Speicherzelle des Schieberegisters SR mit dem Eingang des Multiplexers MUX verbunden, der dem kleinstmöglichen Zählwert des Zählers Z, d. h. der grösstmöglichen Leitungsverzögerung, entspricht, die zweite Speicherzelle mit dem dem zweitkleinsten Zählwert entsprechenden Eingang usw.

Beträgt nun beispielsweise die zeitliche Verschiebung zwischen den Rahmenkennungssignalen FMBi und FMBe fünf Perioden des Systemtaktes CKA, dann wird die abgehende Datenleitung mit derjenigen Speicherzelle des Schieberegisters SR verbunden, der die Ordnungsnummer $256 − x − 5 = 251 − x$ zugeordnet ist. Demzufolge erfährt der aus dem Schieberegister SR ausgelesene Informationsstrom gegenüber dem eingelesenen Informationsstrom eine zeitliche Verzögerung $z = 251 − x$. Die derart aus dem Schieberegister SR ausgelesenen Informationen D können nun mit dem Systemtakt CKA übernommen und rahmensynchron weiterverarbeitet werden. Durch die ständige Ermittlung der zeitlichen Verschiebung zwischen den Rahmenkennungssignalen FMBi und FMBe ist der Zeitrahmengleichlauf gewährleistet.

Weist das Schieberegister SR 256 Speicherzellen auf, lässt sich theoretisch jede mögliche Verzögerung ausgleichen. Da jedoch in jeder Zeitstufe des Durchschaltenetzwerkes CSN pro angeschlossene Vielfachleitung HWX ein Schieberegister SR erforderlich ist, wird es in der Praxis im Interesse eines geringen Schaltungsaufwandes zweckmässig sein, die Anzahl der Schieberegisterzellen möglichst klein zu halten. Dies ist leicht zu realisieren, da — wie bereits erwähnt — in der Regel die konstante Verarbeitungsverzögerung x bekannt ist. Wenn also $x \geqslant 248$ ist, genügt ein einfaches Schieberegister SR mit 8 Speicherzellen.

## Patentansprüche

1. Anordnung zur Taktversorgung in einer digitalen Nachrichtenvermittlungsanlage mit voneinander räumlich getrennten zentralen und peripheren Funktionseinheiten, zwischen denen ein Informationsaustausch in beiden Richtungen nach dem Zeitvielfachverfahren stattfindet, wobei die peripheren Funktionseinheiten über auf einen Anschlussverteiler geführte Verbindungen mit einem Taktsignal und einem Rahmenkennungssignal individuell versorgt werden, und wobei ein zentraler Taktgeber vorhanden ist, der mit jeder zentralen Funktionseinheit zur direkten Versorgung derselben mit dem Taktsignal und dem Rahmenkennungssignal verbunden ist, dadurch gekennzeichnet, dass der zentrale Taktgeber (CCG) über gleichlange Kabel (K1... Kk) mit jeder zentralen Funktionseinheit (CSN1... CSNk) verbunden ist, welche Kabel (K1... Kk) ein Leitungspaar zur direkten Versorgung der zentralen Funktionseinheiten (CSN) mit dem Taktsignal (CKA) und dem Rahmenkennungssignal (FMB) sowie n/k zusätzliche auf den Anschlussverteiler (AV1... AVk) geführte Leitungspaare zur individuellen Versorgung von n/k peripheren Funktionseinheiten (LTG1... LTGn) mit dem Taktsignal (CKA) und dem Rahmenkennungssignal (FMB) enthalten, dass die peripheren Funktionseinheiten (LTG1... LTGn) an zugeordnete Kabel (L1... Ln) angeschlossen sind, die neben den für den Daten- und Sprachinformationsaustausch zwischen den zentralen und den peripheren Funktionseinheiten (CSN bzw. LTG) vorgesehenen Vierdrahtvielfachleitungen (HWY1... k) die vom Anschlussverteiler (AV1... AVk) weiterführenden Leitungen zur Versorgung der peripheren Funktionseinheiten (LTG) mit dem Taktsignal (CKA) und dem Rahmenkennungssignal (FMB) sowie pro Vielfachleitung (HWY) eine der Rückübertragung des Rahmenkennungssignals (FMB) von den peripheren zu den zentralen Funktionseinheiten dienende Leitung (FMBe1... k) enthalten, und dass in den zentralen Funktionseinheiten (CSN) pro angeschlossene Vielfachleitung (HWY) eine Steuerschaltung (CC) vorhanden ist, die den Zeitrahmengleichlauf zwischen der von der zentralen Funktionseinheit (CSN) abgehenden und der in dieser ankommenden Uebertragungsrichtung aufrechterhält.

2. Anordnung nach Anspruch 1, dadurch gekennzeichnet, dass die vom zentralen Taktgeber (CCG) wegführenden Kabel (K) ein einziges Leitungspaar enthalten, das auf den Anschlussverteiler (AV) geführt ist, von wo aus die Aufteilung einerseits auf die zentrale Funktionseinheit (CSN) und andererseits auf die n/k Anschlussgruppen (LTG) erfolgt.

3. Anordnung nach Anspruch 1 oder 2, dadurch gekennzeichnet, dass die Steuerschaltung (CC) aus einem Schaltungsteil besteht, der aus dem Taktsignal (CKA) ein das zeitgerechte Einlesen der von den peripheren Funktionseinheiten (LTG) eintreffenden Informationen gewährleistendes Empfangssignal (CKAs) erzeugt, und dass die Steuerschaltung (CC) ferner eine Zählschaltung (CS, Z) enthält, die ständig den notwendigen Rahmenausgleich z ermittelt und deren Zählwert einem Speicher (M) zugeführt wird, aufgrund dessen Inhalt die abgehende Informationsleitung mit einem bestimmten Ausgang eines Schieberegisters (SR) verbunden wird, dessen Eingang mit der ankommenden Informationsleitung verbunden ist und das mit dem Empfangssignal (CKAs) getaktet ist.

## Claims

1. An arrangement for the clock pulse supply in a digital communications switching system with central and peripheral function units which are spatially separated from one another and between which an information exchange takes place in both directions in accordance with the time multiplex method, wherein the peripheral function units are individually supplied with a clock pulse signal and a frame mark signal by means of connections which are led to a distribution frame, and wherein is arranged a central clock pulse generator which is connected to each central function unit for the direct supply thereof with the clock pulse signal and the frame mark signal, characterised in that the central clock pulse generator (CCG) is connected to each central function unit (CSN1... CSNk) by means of cables (K1... Kk) of the same length, which cables (K1... Kk) comprise a pair of lines for the direct supply of the central function units (CSN) with the clock pulse signal (CKA) and the frame mark signal (FMB), and n/k additional line pairs which are led to the distribution frame (AV1... AVk) and serve for the individual supply of n/k peripheral function units (LTG1... LTGn) with the clock pulse signal (CKA) and the frame mark signal (FMB), that the peripheral function units (LTG1... LTGn) are connected to assigned cables (L1... Ln), which, in addition to the four-wire multiplex lines (HWY1... k) which are arranged for the data and speech information exchange between the central and the peripheral function units (CSN and LTG), comprise the lines, which extend from the distribution frame (AV1... AVk) and serve for the supply of the peripheral function units (LTG) with the clock pulse signal (CKA) and the frame mark signal (FMB), and for each multiplex line (HWY) comprise a line (FMBel... k) which serves for the re-transmission of the frame mark signal (FMB) from the peripheral to the central function units, and that in the central function units (CSN), for each connected multiplex line (HWY), there is arranged a control circuit (CC) which maintains the time frame synchronism between the outgoing and incoming direction of transmission in relation to the central function unit (CSN).

2. An arrangement as claimed in claim 1, characterised in that the cables (K) extending from the central clock pulse generator (CCG) comprise one single line pair which is led to the distribution frame (AV), from where the distribution to the central function unit (CSN) on the one hand and to the n/k terminal groups (LTG) on the other hand is carried out.

3. An arrangement as claimed in claim 1 or 2, characterised in that the control circuit (CC) comprises a circuit portion which produces a receiving signal (CKAs) from the clock pulse signal (CKA), which receiving signal ensures the timely read-in of the items of information arriving from the peripheral function units (LTG), and that the control circuit (CC) further comprises a counting circuit (CS, Z) which constantly determines the required frame balance z and whose count value is fed to a store (M), on the basis of whose content the outgoing information line is connected to a specific output of a shift register (SR), whose input is connected to the incoming information line and which is pulsed by means of the receiving signal (CKAs).

## Revendications

1. Dispositif délivrant le signal d'horloge dans une installation de télécommunications numérique comportant des unités fonctionnelles centrales et périphériques séparées dans l'espace, entre lesquelles il s'établit un échange d'informations dans les deux sens selon le procédé de multiplexage temporel, et dans lequel les unités fonctionnelles périphériques sont alimentées individuellement par un signal d'horloge et par un signal de marquage de trame au moyen de liaisons établies par l'intermédiaire d'un répartiteur de raccordement et dans lequel il est prévu un générateur central d'horloge qui est relié à chaque unité fonctionnelle centrale de manière à alimenter directement cette dernière avec un signal d'horloge et avec le signal de marquage de trame, caractérisé par le fait que le générateur central d'horloge (CCG) est relié par l'intermédiaire de câbles (K1... Kk), de même longueur, à chaque unité fonctionnelle centrale (CSN1... CSNk), lesquels câbles (K1... Kk) contiennent une paire de lignes servant à l'alimentation directe des unités fonctionnelles centrales (CSN) avec le signal d'horloge (CKA) et avec le signal de marquage de trame (FMB), ainsi que n/k paires supplémentaires de lignes, aboutissant au répartiteur de raccordement (AV1... AVk) pour réaliser l'alimentation individuelle de n/k unités fonctionnelles périphériques (LTG1... LTGn) avec le signal d'horloge (CKA) et le signal de marquage de trame (FMB), que les unités fonctionnelles périphériques (LTG1... LTGn) sont raccordées à des câbles associés (L1... Ln) qui contiennent, outre les circuits de multiplexage à quatre fils (HWY1... k) prévus pour l'échange de données et d'informations parlées entre les unités fonctionnelles centrales et les unités fonctionnelles périphériques (CSN ou LTG), les lignes partant du répartiteur de raccordement (AV1... AVk) et servant à alimenter les unités fonctionnelles périphériques (LTG) avec le signal d'horloge (CKA) et avec le signal de marquage de trame (FMB) ainsi que, pour chaque ligne multiple (HWY), une ligne (FMBe1... k) servant à transmettre en retour le signal de marquage de trame (FMB) des unités fonctionnelles périphériques aux unités fonctionnelles centrales, et qu'il est prévu pour chaque ligne multiple raccordée (HWY), dans les unités fonctionnelles centrales (CSN), un circuit de commande (CC) qui maintient le synchronisme des trames entre le sens de transmission partant de l'unité fonctionnelle centrale (CSN) et le sens de transmission entrant dans cette unité.

2. Dispositif suivant la revendication 1, caractérisé par le fait que les câbles (K) partant du générateur central d'horloge (CCG), contiennent une seule paire de lignes, qui est relié au répartiteur de raccordement (AV), à partir duquel s'effectue la répartition d'une part vers l'unité fonctionnelle centrale (CSN) et d'autre part vers les n/k groupes de raccordement (LTG).

3. Dispositif suivant la revendication 1 ou 2, caractérisé par le fait que le circuit de commande (CC) est constitué par un élément de circuit, qui produit, à partir du signal d'horloge (CKA), un signal de réception (CKAs) garantissant l'enregistrement correct dans le temps des informations délivrées par les unités fonctionnelles périphériques (LTG), et que le circuit de commande (CC) comporte en outre un circuit de comptage (CS, Z) qui détermine en permanence le retard de trame z à compenser et dont la valeur de comptage est envoyée à une mémoire (M), sur la base du contenu de laquelle la ligne de transmission d'informations partantes est reliée à une sortie déterminée d'un registre à décalage (SR), dont l'entrée est raccordée à la ligne de transmission d'informations entrantes et dont le signal d'horloge est le signal de réception (CKAs).

FIG.1

FIG. 2

0 085 144

FIG.3

FIG.4

3

FIG.5

FIG.6